# EUROPEAN PATENT SPECIFICATION

(11) **EP 4 279 732 B1**
(45) Date of publication and mention of the grant of the patent: **20.08.2025**
(21) Application number: 23173561.4
(22) Date of filing: 16.05.2023
(51) Int. Cl.: F02M 21/02, F02M 25/022, F02M 25/025, B60K 6/48, B60K 6/52, B60L 50/16, B60L 50/72, B60L 58/40

(54) **ROAD VEHICLE PROVIDED WITH A HYDROGEN-POWERED INTERNAL COMBUSTION ENGINE**
STRASSENFAHRZEUG MIT WASSERSTOFFBETRIEBENEM VERBRENNUNGSMOTOR
VÉHICULE ROUTIER ÉQUIPÉ D'UN MOTEUR À COMBUSTION INTERNE À HYDROGÈNE

(30) Priority: 18.05.2022 IT 202200010289
(43) Date of publication of application: 22.11.2023
(73) Proprietor: FERRARI S.p.A., 41100 Modena (IT)
(72) Inventor: CORRIGAN, Daire, 41100 MODENA (IT)
(74) Representative: Studio Torta S.p.A.

(56) References cited:
- EP-A1- 3 982 032
- WO-A1-2014/054095
- CN-A- 113 565 626
- CN-A- 114 439 608
- JP-A- 2006 132 407
- JP-A- 2006 299 890

## Description

### TECHNICAL FIELD

The present invention relates to a road vehicle provided with a hydrogen-powered internal combustion engine.

### PRIOR ART

Hydrogen in the natural state does not exist on the earth because it is combined in the molecules with other atoms (for example water or hydrocarbons) and therefore in order to have hydrogen it is necessary to produce it by means of reforming or electrolysis consuming other energy (consequently, hydrogen is not an energy source but an energy carrier).

The environmental impact of a car provided with a hydrogen-powered internal combustion engine is a lot lower with respect to the environmental impact of a similar car provided with an internal combustion engine powered with a fossil fuel, since a hydrogen-powered internal combustion engine does not generate greenhouse gas (CO₂) and generates very few CO, HC and fine dust (generated due to a minimum amount of lubricating oil which is burned in the combustion chambers). Even lower are the polluting emissions of a car provided with a hydrogen-powered fuel cell which generates the electrical energy necessary for an (at least one) electric motor.

In order to generate energy through hydrogen it is possible to use combustion cells (or fuel cells) which enable producing the electricity necessary for powering an (at least one) electric motor without any combustion. Alternatively, a combustion of hydrogen is also possible by directly or indirectly injecting hydrogen into the combustion chambers of an internal combustion engine; in this case, the engine does not generate carbon dioxide and generates a lot less pollutants with respect to a similar internal combustion engine powered with hydrocarbons.

Hydrogen has a reduced density (having a very simple molecule composed of only two atoms of hydrogen) and therefore in order to be able to store a suitable amount (mass) of hydrogen it is necessary to use a relatively voluminous (thus heavy) tank also when the maximum stocking pressure of hydrogen reaches 700 bars (which currently represent a market standard).

When wanting to obtain a high power transmittable to the drive wheels (indispensable for manufacturing a highly performing sports car) it is necessary to provide for particularly bulky and heavy combustion cells and this considerably penalizes the dynamic performance of the road vehicle. Alternatively, as mentioned in the foregoing, it is possible to replace the combustion cells which generate electricity destined to one or more electric motors with an internal combustion engine which is directly powered by hydrogen; however, with this solution the energy efficiency of the conversion of hydrogen into mechanical energy is relatively reduced (in the order of 20-45% against 70% reachable by means of fuel cells) and is particularly low when the road vehicle moves at a low speed (i.e. exploiting only a modest fraction of the maximum performance reachable by the internal combustion engine). Consequently, in a road vehicle provided with an internal combustion engine which is directly powered by hydrogen it is necessary to provide for a particularly bulky and heavy tank of hydrogen and this considerably penalizes the dynamic performance of the road vehicle.

Furthermore, hydrogen has a much higher flame speed than hydrocarbons (in the order of 5-10 times as much) and consequently an internal combustion engine which is powered by hydrogen tends to have a high noisiness (obviously undesired) due to the high combustion speed of the air-hydrogen mixture in the combustion chambers also in the absence of detonating events. In order to reduce the noisiness of a hydrogen-powered internal combustion engine it is possible to operate with very lean mixtures (i.e. with lambda ratios close to two and therefore very distant from the stoichiometric). However, operating with very lean mixtures forces to install in the exhaust system an NOₓ reduction device, such as an SCR ("Selective Catalytic Reduction") catalyst which requires a urea source since, in order to lower the NOₓ operating with very lean mixtures, the presence of only a trivalent catalyst (which instead is a lot more effective in lowering NOₓ operating under stoichiometric conditions) is not sufficient. Furthermore, operating with very lean mixtures penalizes the performance, for example operating with a lambda ratio equal to two the maximum power that can be generated by the internal combustion engine is halved with respect to the stoichiometric condition.

In order to prevent the spontaneous detonation of the air-hydrogen mixture it is also possible to recur to the injection of water into the combustion chambers since the presence of water has an effective anti-detonating effect; however, an internal combustion engine which is directly powered by hydrogen and which has a high maximum power has a considerable water consumption which imposes the presence of a particularly bulky and heavy water tank and this considerably penalizes the dynamic performance of the road vehicle (besides obliging, at every replenishment of hydrogen, to simultaneously fill also the water tank with demineralized water).

Patent applications no. CN114439608A and no. CN113565626A describe an internal combustion engine which is powered by hydrogen and is provided with an injection of water into the cylinders.

### DESCRIPTION OF THE INVENTION

The object of the present invention is to provide a road vehicle provided with a hydrogen-powered internal combustion engine which allows achieving high performance (particularly in sports driving on track) thanks to a combination of a high power which can be transmitted to the drive wheels and of an overall reduced mass.

According to the present invention, a road vehicle provided with a hydrogen-powered internal combustion engine is provided, in accordance with what claimed in the appended claims.

### BRIEF DESCRIPTION OF THE DRAWINGS

The present invention will now be described with reference to the accompanying drawings, which illustrate a non-limiting example embodiment thereof, wherein:
- Figure 1 is a schematic plan view of a hydrogen-powered road vehicle manufactured in accordance with the present invention; and
- Figure 2 is a schematic view of an internal combustion engine of the road vehicle of Figure 1 and directly powered by hydrogen.

### PREFERRED EMBODIMENTS OF THE INVENTION

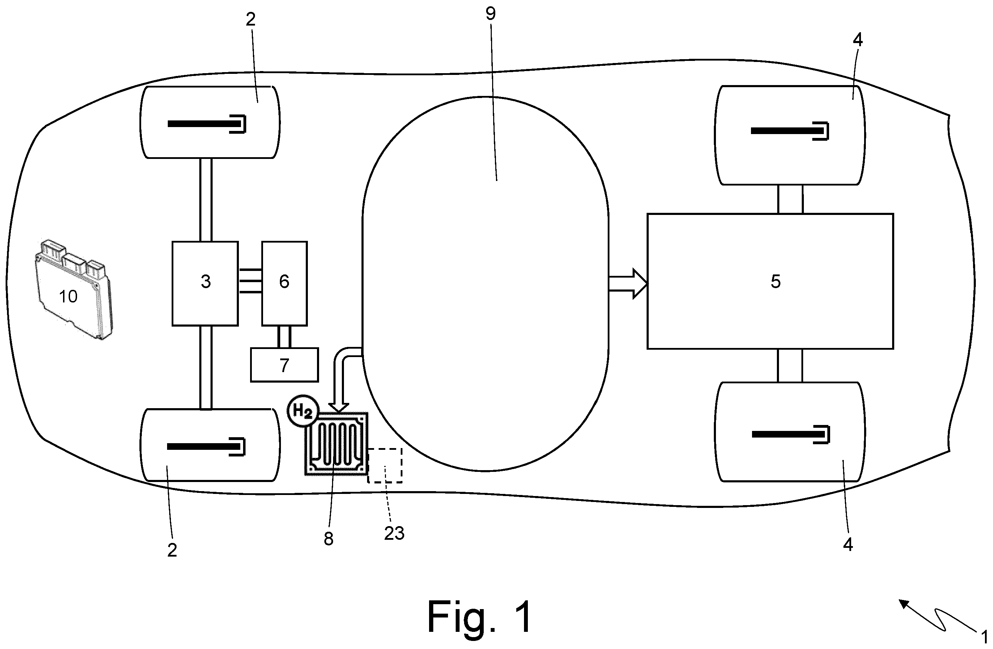

In Figure 1, reference numeral 1 indicates, as a whole, a hybrid road vehicle (i.e. with hybrid propulsion) provided with two front drive wheels 2 which receive the torque from an (at least one) electric machine 3 and with two rear drive wheels 4 which receive the torque from an internal combustion engine 5 (it could also be vice versa, i.e. the two rear drive wheels 4 receive the torque from the electric machine 3 and the two front drive wheels 2 receive the torque from the internal combustion engine 5). The electric machine 3 is connected to the two front drive wheels 2 by means of a transmission system (of known type and not illustrated) provided with a front differential; similarly, also the internal combustion engine 5 is connected to the two rear drive wheels 4 by means of a transmission system (of known type and not illustrated) provided with a gearbox and with a rear differential.

According to other embodiments not illustrated, the electric machine 3 is connected to the rear drive wheels 4, whereas the internal combustion engine 5 is connected to the front drive wheels 2, or both the electric machine 3 and the internal combustion engine 5 are connected to the front drive wheels 2 or to the rear drive wheels 4.

The electric machine 3 is reversible (i.e. can operate both as electric motor absorbing electrical energy and generating a mechanical torque, and as electric generator absorbing mechanical energy and generating electrical energy) and is driven by a driving device 6 (in particular an AC/DC electronic power converter, i.e. an inverter) which is connected to a (small) electrical energy storage system 7 provided with chemical batteries or with super capacitors (having for example a storage capacity in the order of 1 kWh). In this application, the driving device 6 is bidirectional and comprises a side in direct current connected to the storage system 7 and a side in three-phase alternate current which is connected to the electric machine 3.

Furthermore, a fuel cell 8 is provided which is powered by hydrogen for generating the electricity necessary for the operation of the electric machine 3; the fuel cell 8 can directly power the electric machine 3 and can, alternatively, power the storage system 7.

Finally, a tank 9 is provided which contains hydrogen under high pressure (for example with a maximum pressure of approximately 700 bars) and is configured to power hydrogen both to the fuel cell 8 and to the internal combustion engine 5. In other words, the tank 9 is configured to power hydrogen both to the fuel cell 8 and to the internal combustion engine 5.

The road vehicle 1 comprises a control unit 10 which is configured to use, for the traction, only the electric machine 3 (powered by the fuel cell 8 after a possible very short initial route travelled by using the electrical energy stored in the storage system 7) when the power request is smaller than a power threshold (which could have a variable value also depending on the preferences of the driver and on the temperature of a cooling liquid of the internal combustion engine 5) and to use, for the traction, also the internal combustion engine 5 (which adds to or replaces the electric machine 3) when the power request is greater than the power threshold.

The control unit 10 uses the electric machine 3 for performing, when possible, a regenerative braking of the road vehicle 1 consequently loading the storage system 7; therefore, when the storage system 7 is sufficiently loaded, the control unit 10 uses part of the energy stored in the storage system 7 for activating as motor the electric machine 3 temporarily decreasing the production of electrical energy by the fuel cell 8 or the production of mechanical energy by the internal combustion engine 5.

In other words, the control unit 10 is configured to determine a power requested by the movement of the road vehicle 1 and to use, for the traction, the sole electric machine 3, when the power requested by the movement of the road vehicle 1 is smaller than the power threshold; i.e. the control unit 10 is configured to keep the internal combustion engine 5 turned off, when the power requested by the movement of the road vehicle 1 is smaller than the power threshold. Therefore, the control unit 10 is configured to use, for the traction, (also) the internal combustion engine 5 (which replaces or adds to the electric machine 3) when the power requested by the movement of the road vehicle 1 is greater than the power threshold.

Generally, it is preferable to never turn off the fuel cell 8 and the electric machine 3, using the internal combustion engine 5 only for providing the mechanical power which cannot be generated (for reached limits of the generation capacity) by the electric machine 3 powered by the fuel cell 8; in fact, the energy efficiency of the generation of mechanical power by means of the fuel cell 8 and the electric machine 3 is anyway always greater than the energy efficiency of the generation of mechanical power by means of the internal combustion engine 5 and it is thus convenient to never renounce the generation of energetically more efficient mechanical power.

According to a preferred embodiment, the electric machine 3 has a rated power (i.e. a maximum power which can be generated) smaller (in a substantial manner, for example with a ratio 1:4 - 1:6) than a rated power (i.e. a maximum power which can be generated) of the internal combustion engine 5; in fact, the electric machine 3 is destined to be used by itself for the *"low"* speed traction, whereas the internal combustion engine 5 is destined to be used (by itself or in combination with the electric machine 3) for the *"high"* speed traction.

According to a preferred embodiment, the fuel cell 8 has a rated power (i.e. a maximum power which can be generated) similar (i.e. similar if not identical) to a rated power (i.e. a maximum power which can be generated) of the electric machine 3; in other words, the fuel cell 8 has to be capable of providing the maximum continuous electric power absorbed by the electric machine 3 (possible transient peaks can be provided by the storage system 7) and it is useless for it to be able to provide more than the maximum continuous electric power absorbed by the electric machine 3.

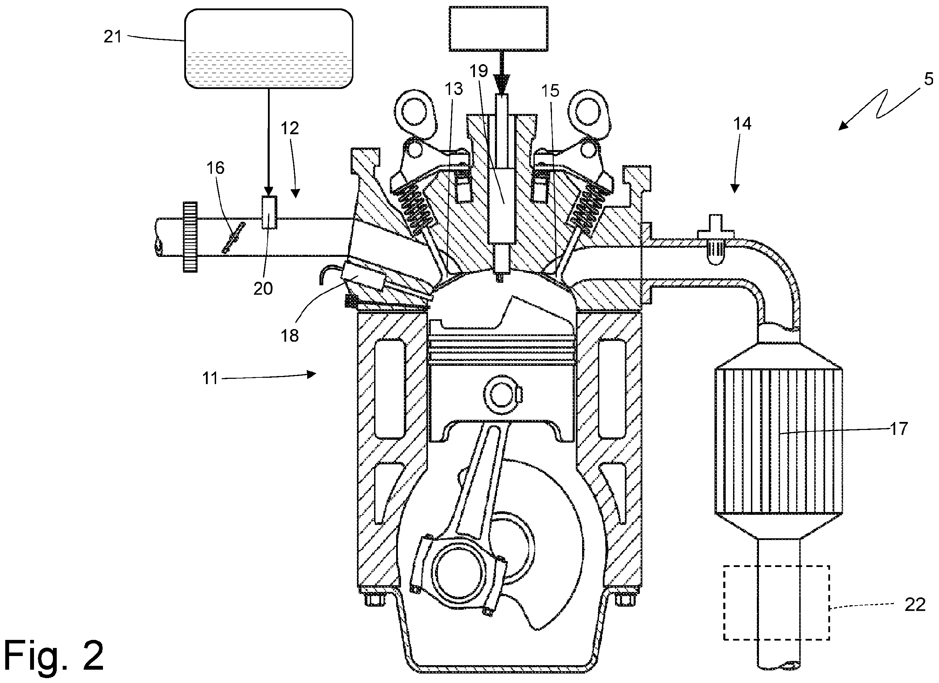

According to what is illustrated in Figure 2, the internal combustion engine 5 comprises a plurality of cylinders 11 (only one of which is illustrated in Figure 2), each of which is connected to an intake duct 12 by means of two intake valves 13 (only one of which is illustrated in Figure 1) and is connected to an exhaust duct 14 by means of two exhaust valves 15 (only one of which is illustrated in Figure 1). Along the intake duct 12 and in the proximity of the cylinders 11 an intake manifold can be present and similarly along the exhaust duct 14 and in the proximity of the cylinders 11 an exhaust manifold can be present.

Along the intake duct 12 a throttle 16 is present which adjusts the airflow rate through the intake duct 12. Along the exhaust duct 14 a (at least one) treatment device 17 is present for treating the gases produced by the combustion for reducing the concentration of the polluting elements (particularly NOₓ) before emitting the gases produced by the combustion into the atmosphere.

The internal combustion engine 1 comprises an injection system, which (directly) injects the hydrogen (which constitutes the fuel) received from the tank 9 inside the cylinders 11 by means of corresponding fuel injectors 18 (only one of which is illustrated in Figure 1). In other words, the injection system comprises a plurality of fuel injectors 18, each of which injects hydrogen (which constitutes the fuel) directly inside a respective cylinder 11 and receives hydrogen from the tank 9 (alternatively the fuel injectors 18 could carry out an indirect injection of hydrogen).

The internal combustion engine 1 comprises an ignition system, which cyclically triggers the ignition of the mixture in the cylinders 11 at the end of the compression step and comprises for each cylinder 11 an (at least one) ignition spark plug 19.

The internal combustion engine 1 comprises a further injection system, which (indirectly) injects water inside the cylinders 11 by means of corresponding water injectors 20 (only one of which is illustrated in Figure 1). In other words, the injection system comprises at least one water injector 20 which injects water into the intake duct 12 close to the cylinders 11 and receives water from a tank 21 which contains water under pressure and at room temperature (alternatively the water injectors 20 could carry out a direct injection of the water).

The control unit 10 is configured to have the internal combustion engine 5 operate under stoichiometric conditions (which allow obtaining a high generation of power with a reduced generation of polluting substances); furthermore, the control unit 10 is configured to use the injection of water for slowing down the combustion of hydrogen in the cylinders 11 (i.e. for reducing the flame speed of the hydrogen inside the cylinders 11) when the combustion is made to occur under stoichiometric conditions (generally it is necessary to inject more water with a great load and less water with a small load).

According to the invention, the control unit 10 is configured to have the internal combustion engine 5 operate under stoichiometric conditions with a great load thanks to the simultaneous injection of water (in this manner a trivalent catalyst present along the exhaust duct 14 can effectively lower the NOₓ); furthermore, the control unit 10 is configured to have the internal combustion engine 5 operate under super lean conditions with a lambda ratio greater than 2.3 with a small load without the simultaneous injection of water (in this manner the generation of NOₓ is substantially zeroed). Within the scope of the invention, great load means the generation of a power greater than 40% of the (maximum) rated power and small load means the generation of a power smaller than 40% of the (maximum) rated power.

In other words, the internal combustion engine 5 enables only two possible operating conditions alternative to one another: stoichiometric conditions combined with the injection of water (only for a great load) and super lean conditions (for example with a lambda ratio greater than 2.3) without injection of water (only for a small load).

In fact, an internal combustion engine produces many NOₓ on a field of lambda ratio from 0.8 to 2.2 approximately and the difficulty of cutting down the NOₓ is definitely less under stoichiometric conditions with respect to lean conditions (i.e. with lambda ratio comprised between 1 and approximately 2.3); i.e. under stoichiometric conditions (when the lambda ratio is equal to 1) also a trivalent catalyst is very effective in cutting down the NOₓ. Under super lean conditions (with a lambda ratio greater than 2.3) the amount of NOₓ produced by an internal combustion engine is very low, to such a degree that a post-treatment is not required.

According to a preferred embodiment, a generator device 22 is provided (schematically illustrated in Figure 2) which is configured to get water in the liquid state, which is collected in the tank 21, by condensing exhaust gases produced by the internal combustion engine 5; i.e. the generator device 22 is arranged along the exhaust duct 14 of the internal combustion engine 5 for separating and condensing (at least) a part of the water vapour present in the exhaust gases emitted by the cylinders 11. Preferably, the control unit 10 is configured to use (in a priority manner but not necessarily in an exclusive manner) the generator device 22 when the internal combustion engine 5 is cold (i.e. in the instants following the first start) i.e. when the exhaust gases emitted by the cylinders 11 are colder and thus more easily condensable.

According to a preferred embodiment, a generator device 23 is provided (schematically illustrated in Figure 1) which is configured to get water in the liquid state, which is collected in the tank 21, by condensing exhaust gases (i.e. substantially water vapour) produced by the fuel cell 8. Preferably, the control unit 10 is configured to use (in a priority manner but not necessarily in an exclusive manner) the generator device 23 when the fuel cell 8 is cold (i.e. in the instants following the first start) i.e. when the exhaust gases emitted by the fuel cell 8 are colder and thus more easily condensable. To such regard, it is important to observe that in any case the exhaust gases emitted by the fuel cell 8 always have a much lower temperature than the exhaust gases emitted by the internal combustion engine 5 since in the combustion chambers of the internal combustion engine 5 it is possible to reach combustion temperatures above 2000-2200°C, whereas the fuel cell 8 works in a temperature range comprised between 100°C and 1000°C depending on the type of cell; therefore, the exhaust gases emitted by the fuel cell 8 are always more easily condensable with respect to the exhaust gases emitted by the internal combustion engine 5.

In the embodiment illustrated in the accompanying figures, the road vehicle 1 is a car with four wheels 2 and 4 which are all drive wheels. According to a different embodiment not illustrated, the road vehicle 1 could be a car with only two drive wheels 2 or 4 to which both the electric machine 3 and the internal combustion engine 5 are connected. According to further embodiments not illustrated, the road vehicle 1 could be a motorcycle with a single drive wheel or a truck or a bus with two, four or more drive wheels.

According to a different embodiment not illustrated, the fuel cell 8 which generates electrical energy is not present; in this embodiment, the electric machine 3 could be anyway present (for creating a hybrid traction with or without the possibility of recharging from the outside the electrical energy storage system 7) or the electric machine 3 could also be absent.

The embodiments described herein can be combined with one another without departing from the scope of protection of the present invention.

The above-described road vehicle 1 has numerous advantages.

Firstly, the above-described road vehicle 1 allows combining at the same moment the ability to deliver a high mechanical power (suitable for sports driving on track), a reduced overall mass, and a high average energy efficiency of the conversion of hydrogen into mechanical energy (in this manner the tank 9 containing hydrogen can be relatively small and light yet anyway guaranteeing good autonomy in everyday driving). This result is obtained by combining the presence of a (small and thus light) fuel cell 8 with the presence of the internal combustion engine 5 which has a high rated power. The fuel cell 8 has, at all load conditions, a high energy efficiency of the conversion of hydrogen into mechanical energy and is exclusively used in everyday driving at low and medium-low speeds (i.e. in the city and in non-highway movements) guaranteeing high autonomy; whereas, the internal combustion engine 5 is ignited only when there is a request for high power and is thus used only under medium or high load conditions and thus only when it manages to reach a discrete energy efficiency of the conversion of hydrogen (in the order of 40-50%).

On the whole, the above-described road vehicle 1 is relatively light since not only the tank 9 of hydrogen (fuel) is of modest dimensions but also the fuel cell 8 and the electric machine 3 (since the high power is guaranteed by the internal combustion engine 5) and the water tank 21 (since it can count on a generation of water during the travel of the road vehicle 1) are of modest dimensions.

Furthermore, the above-described road vehicle 1 allows substantially reducing the noisiness produced by the internal combustion engine 5 thanks to the injection of water into the cylinders 11 since the presence of water in the combustion chambers reduces the combustion speed of the air-hydrogen mixture; such reduction of the noisiness is obtained without any penalization of the maximum power which can be generated by the internal combustion engine 5 (since thanks to the injection of water it is possible to still operate under stoichiometric conditions). Since the water is necessary for the injection into the cylinders 11 (almost completely) self-generated during the travel of the road vehicle 1, the water tank 21 can be small and can be filled up quite rarely (i.e. definitely less frequently with respect to the filling of the hydrogen tank 9).

The above-described road vehicle 1 requires the presence only of a trivalent catalyst arranged along the exhaust duct 14 of the internal combustion engine 5, i.e. the presence of an SCR catalyst needing a urea source is not necessary. In particular, it is possible to have the internal combustion engine 5 operate with a great load under stoichiometric conditions thanks to the simultaneous injection of water and under these conditions the generation of NOₓ is present but it can be effectively lowered also by the sole trivalent catalyst, and it is possible to have the internal combustion engine 5 operate with a small load under super lean conditions with a lambda ratic greater than 2.3 for annulling or almost annulling the amount of NOₓ produced without injecting water (exploiting the high flame speed of the mixture of hydrogen and oxygen for obtaining the complete combustion also under super lean conditions).

Finally, the above-described road vehicle 1 is simple and cost-effective to manufacture since it substantially uses commercial components (i.e. already available in commerce).

### LIST OF THE REFERENCE NUMERALS OF THE FIGURES

- 1: road vehicle
- 2: front wheels
- 3: electric machine
- 4: rear wheels
- 5: internal combustion engine
- 6: driving device
- 7: storage system
- 8: fuel cell
- 9: tank
- 10: control unit
- 11: cylinder
- 12: intake duct
- 13: intake valve
- 14: exhaust duct
- 15: exhaust valve
- 16: throttle
- 17: treatment device
- 18: fuel injector
- 19: ignition spark plug
- 20: water injectors
- 21: tank
- 22: generator device
- 23: generator device

## Claims

1. A road vehicle (1) comprising:
at least one drive wheel (2, 4);
a first tank (9) configured to contain hydrogen;
a second tank (21) which is separate from and independent of the first tank (9) and is configured to contain water; and
an internal combustion engine (5), which is powered by hydrogen, is configured to transmit the motion to the drive wheel (2, 4) and comprises at least one cylinder (11), a fuel injector (18) configured to inject hydrogen into the cylinder (11), and a water injector (20) configured to inject water into the cylinder (11);
the road vehicle (1) is **characterized in that** it comprises a control unit (10) which is configured to:
have the internal combustion engine (5) operate, when it is with a great load generating a power greater than 40% of a rated power, under stoichiometric conditions simultaneously activating the injection of water; and
have the internal combustion engine (5) operate, when it is with a small load generating a power smaller than 40% of the rated power, under super lean conditions having a lambda ratio greater than 2.3 without the simultaneous injection of water.

2. The road vehicle (1) according to claim 1 and comprising a first generator device (22), which is configured to obtain water in the liquid state, which is collected in the second tank (21) condensing exhaust gases produced by the internal combustion engine (5).

3. The road vehicle (1) according to claim 2, wherein the control unit (10) is configured to use the first generator device (22), when the internal combustion engine (5) is cold.

4. The road vehicle (1) according to claim 1, 2 or 3 and comprising:
an electric machine (3) configured to transmit the motion to the drive wheel (2, 4); and
a fuel cell (8), which is powered by hydrogen and is configured to generate electrical energy that can be used by the electric machine (3).

5. The road vehicle (1) according to claim 4 and comprising a second generator device (23), which is configured to obtain water in the liquid state, which is collected in the second tank (21) condensing exhaust gases produced by the fuel cell (8).

6. The road vehicle (1) according to claim 5 and comprising a control unit (10) configured to use the second generator device (23), when the fuel cell (8) is cold.

7. The road vehicle (1) according to claim 4, 5 or 6, wherein the control unit (10), is configured to determine a power requested by the movement of the road vehicle (1) and to use, for the traction, the sole electric machine (3), when the power requested by the movement of the road vehicle (1) is smaller than a power threshold.

8. The road vehicle (1) according to claim 7, wherein the control unit (10) is configured to keep the internal combustion engine (5) turned off, when the power requested by the movement of the road vehicle (1) is smaller than the power threshold.

9. The road vehicle (1) according to claim 7 or 8, wherein the control unit (10) is configured to also use, for the traction, the internal combustion engine (5), when the power requested by the movement of the road vehicle (1) is greater than the power threshold.

10. The road vehicle (1) according to one of the claims from 1 to 9, wherein the control unit (10) is configured to use the injection of water to slow down the combustion of hydrogen in the cylinder (11).

## Patentansprüche

1. Straßenfahrzeug (1), umfassend:
mindestens ein Antriebsrad (2, 4);
einen ersten Tank (9), der dazu konfiguriert ist, Wasserstoff zu enthalten;
einen zweiten Tank (21), der von dem ersten Tank (9) getrennt und davon unabhängig ist und dazu konfiguriert ist, Wasser zu enthalten; und
einen Verbrennungsmotor (5), der mit Wasserstoff angetrieben wird, so konfiguriert ist, dass er die Bewegung auf das Antriebsrad (2, 4) überträgt, und mindestens einen Zylinder (11), eine Kraftstoffeinspritzdüse (18), die so konfiguriert ist, dass sie Wasserstoff in den Zylinder (11) einspritzt, und eine Wassereinspritzdüse (20) umfasst, die so konfiguriert ist, dass sie Wasser in den Zylinder (11) einspritzt;
das Straßenfahrzeug (1) **dadurch gekennzeichnet ist, dass** es eine Steuereinheit (10) umfasst, die konfiguriert ist, um:
den Verbrennungsmotor (5) unter stöchiometrischen Bedingungen arbeiten zu lassen, wenn er bei hoher Last eine Leistung von mehr als 40 % einer Nennleistung erzeugt, wobei gleichzeitig die Wassereinspritzung aktiviert wird; und
den Verbrennungsmotor (5) unter supermageren Bedingungen arbeiten zu lassen, wenn er bei geringer Last eine Leistung von weniger als 40 % der Nennleistung erzeugt, aufweisend ein Lambda-Verhältnis von mehr als 2,3 ohne gleichzeitige Einspritzung von Wasser.

2. Straßenfahrzeug (1) nach Anspruch 1 und umfassend eine erste Generatorvorrichtung (22), die konfiguriert ist, um Wasser in dem flüssigen Zustand zu erhalten, das in dem zweiten Tank (21) gesammelt wird, das durch den Verbrennungsmotor (5) erzeugte Abgase kondensiert.

3. Straßenfahrzeug (1) nach Anspruch 2, wobei die Steuereinheit (10) so konfiguriert ist, dass sie die erste Generatorvorrichtung (22) verwendet, wenn der Verbrennungsmotor (5) kalt ist.

4. Straßenfahrzeug (1) nach Anspruch 1, 2 oder 3, umfassend:
eine elektrische Maschine (3), die so konfiguriert ist, dass sie die Bewegung auf das Antriebsrad (2, 4) überträgt; und
eine Brennstoffzelle (8), die mit Wasserstoff angetrieben wird und so konfiguriert ist, dass sie elektrische Energie erzeugt, die von der elektrischen Maschine (3) genutzt werden kann.

5. Straßenfahrzeug (1) nach Anspruch 4 und umfassend eine zweite Generatorvorrichtung (23), die dazu konfiguriert ist, Wasser im flüssigen Zustand zu erhalten, das in dem zweiten Tank (21) gesammelt wird, das von der Brennstoffzelle (8) erzeugte Abgase kondensiert.

6. Straßenfahrzeug (1) nach Anspruch 5 und umfassend eine Steuereinheit (10), die so konfiguriert ist, dass sie die zweite Generatorvorrichtung (23) verwendet, wenn die Brennstoffzelle (8) kalt ist.

7. Straßenfahrzeug (1) nach Anspruch 4, 5 oder 6, wobei die Steuereinheit (10) dazu konfiguriert ist, eine von der Bewegung des Straßenfahrzeugs (1) angeforderte Leistung zu bestimmen und für die Traktion die einzige elektrische Maschine (3) zu verwenden, wenn die von der Bewegung des Straßenfahrzeugs (1) angeforderte Leistung kleiner als ein Leistungsschwellenwert ist.

8. Straßenfahrzeug (1) nach Anspruch 7, wobei die Steuereinheit (10) so konfiguriert ist, dass sie den Verbrennungsmotor (5) ausgeschaltet hält, wenn die durch die Bewegung des Straßenfahrzeugs (1) angeforderte Leistung kleiner als der Leistungsschwellenwert ist.

9. Straßenfahrzeug (1) nach Anspruch 7 oder 8, wobei die Steuereinheit (10) so konfiguriert ist, dass sie den Verbrennungsmotor (5) auch für die Traktion verwendet, wenn die durch die Bewegung des Straßenfahrzeugs (1) angeforderte Leistung größer als der Leistungsschwellenwert ist.

10. Straßenfahrzeug (1) nach einem der Ansprüche 1 bis 9, wobei die Steuereinheit (10) dazu konfiguriert ist, die Wassereinspritzung zu verwenden, um die Verbrennung von Wasserstoff in dem Zylinder (11) zu verlangsamen.

## Revendications

1. Un véhicule routier (1) comprenant :
au moins une roue motrice (2, 4) ;
un premier réservoir (9) configuré pour contenir de l'hydrogène ;
un second réservoir (21), qui est séparé et indépendant du premier réservoir (9), et est configuré pour contenir de l'eau ; et
un moteur à combustion interne (5), qui est alimenté par de l'hydrogène, est configuré pour transmettre le mouvement à la roue motrice (2, 4) et comprend au moins un cylindre (11), un injecteur de carburant (18) configuré pour injecter de l'hydrogène dans le cylindre (11), et un injecteur d'eau (20) configuré pour injecter de l'eau dans le cylindre (11) ;
le véhicule routier (1) est **caractérisé en ce qu'**il comprend une unité de commande (10) qui est configurée pour :
faire fonctionner le moteur à combustion interne (5), lorsqu'il est à forte charge générant une puissance supérieure à 40 % d'une puissance nominale, dans des conditions stœchiométriques en activant simultanément l'injection d'eau ; et
faire fonctionner le moteur à combustion interne (5), lorsqu'il est soumis à une faible charge générant une puissance inférieure à 40 % de la puissance nominale, dans des conditions super pauvres avec un rapport lambda supérieur à 2,3 sans injection simultanée d'eau.

2. Véhicule routier (1) selon la revendication 1 et comprenant un premier dispositif générateur (22), qui est configuré pour obtenir de l'eau à l'état liquide, qui est recueillie dans le second réservoir (21) en condensant les gaz d'échappement produits par le moteur à combustion interne (5).

3. Véhicule routier (1) selon la revendication 2, dans lequel l'unité de commande (10) est configurée pour utiliser le premier dispositif générateur (22) lorsque le moteur à combustion interne (5) est froid.

4. Véhicule routier (1) selon la revendication 1, 2 ou 3 et comprenant :
une machine électrique (3) configurée pour transmettre le mouvement à la roue motrice (2, 4) ; et
une pile à combustible (8), qui est alimentée par de l'hydrogène et est configurée pour générer de l'énergie électrique qui peut être utilisée par la machine électrique (3).

5. Véhicule routier (1) selon la revendication 4 et comprenant un second dispositif générateur (23), qui est configuré pour obtenir de l'eau à l'état liquide, qui est recueillie dans le second réservoir (21) en condensant les gaz d'échappement produits par la pile à combustible (8).

6. Véhicule routier (1) selon la revendication 5 et comprenant une unité de commande (10) configurée pour utiliser le second dispositif générateur (23) lorsque la pile à combustible (8) est froide.

7. Véhicule routier (1) selon la revendication 4, 5 ou 6, dans lequel l'unité de commande (10) est configurée pour déterminer une puissance demandée par le déplacement du véhicule routier (1) et pour utiliser, pour la traction, la seule machine électrique (3), lorsque la puissance demandée par le déplacement du véhicule routier (1) est inférieure à un seuil de puissance.

8. Véhicule routier (1) selon la revendication 7, dans lequel l'unité de commande (10) est configurée pour maintenir le moteur à combustion interne (5) éteint, lorsque la puissance demandée par le déplacement du véhicule routier (1) est inférieure au seuil de puissance.

9. Véhicule routier (1) selon la revendication 7 ou 8, dans lequel l'unité de commande (10) est configurée pour utiliser également, pour la traction, le moteur à combustion interne (5), lorsque la puissance demandée par le déplacement du véhicule routier (1) est supérieure au seuil de puissance.

10. Véhicule routier (1) selon l'une des revendications de 1 à 9, dans lequel l'unité de contrôle (10) est configurée pour utiliser l'injection d'eau afin de ralentir la combustion de l'hydrogène dans le cylindre (11).
